# EUROPEAN PATENT APPLICATION

(11) **EP 4 101 624 A1**
(43) Date of publication of application: **14.12.2022**
(21) Application number: 21750427.3
(22) Date of filing: 21.01.2021
(51) Int. Cl.: B29C 69/02, C08K 5/09, C08K 5/103, C08K 5/20, C08L 29/04, C08K 3/013

(54) **RESIN COMPOSITION AND METHOD FOR PRODUCING MOLDED ARTICLES**

(30) Priority: 07.02.2020 JP 2020019507
(71) Applicant: SEKISUI CHEMICAL CO., LTD., Osaka-shi Osaka 530-8565 (JP)
(72) Inventor: CHITOU, Takahisa, Chita-gun, Aichi 470-2196 (JP)
(74) Representative: Ter Meer Steinmeister & Partner
(86) International application number: PCT/JP2021/002086
(87) International publication number: WO 2021/157375

(57) **Abstract**

A resin composition containing a polyvinyl alcohol-based resin, 0.1% by mass or more and 1.2% by mass or less of a surfactant, and at least any one of an inorganic filler and silicone particles, wherein the resin composition is free of a plasticizer or comprises 5.0% by mass or less of a plasticizer, and satisfies at least any one of the following requirements (1) and (2).
(1) The content of the inorganic filler is 1% by mass or more and 30% by mass or less
(2) The content of the silicone particles is 0.01% by mass or more and 0.45% by mass or less

## Description

### Technical Field

The present invention relates to a resin composition to be used for a core or the like, and a method for producing a molded article using a core.

### Background Art

In the past, use of a core composed of a resin composition having water-solubility, and the like has been studied in order to obtain a molded article having a complicated inner surface by injection molding. For example, PTL1 discloses disposing, inside a metal mold, a core having a shape corresponding to a hollow part or the like of a metal powder sintered body to be produced and injection-molding a metal powder compound using a cavity formed by the metal mold and the core (so-called MIM). The resultant molded article is taken out of the metal mold together with the core, and after the core is removed, the molded article is degreased and sintered, and thereby a metal powder sintered body having a hollow part or the like is produced.

In PTL1, the core is formed from a water-soluble resin, formed from a water-soluble resin to which a water-soluble filler or a non-water-soluble filler is added, or formed from a non-water-soluble resin to which a water-soluble filler is added. The core, when formed from a water-soluble resin or the like, can easily be removed from a molded article by being extracted through immersion in water or other methods.

### Citation List

### Patent Literature

PTL1: JP 2014-34707 A

### Summary of Invention

### Technical Problem

However, when an outer molded article is molded using a core and then the core composed of a water-soluble resin is dissolved in water, the product quality of the outer molded article may be lowered due to the dissolution of the water-soluble resin. For example, in the case where the outer molded article is composed of a sintering metal powder, destruction or fracture may occur or defects may occur to a part of the outer molded article due to a volume change in the water-soluble resin or other reasons when the core is removed with water.

In addition, when the core has low heat resistance or has low releasability to the outer molded article, the inner surface of the outer molded article is roughened in removing the core, so that the surface smoothness of the inner surface of the resultant molded article may be impaired. Further, when an additive, such as a filler, is contained in the core, as described in PTL1, the moldability in molding the core or molding pellets or the like for obtaining the core may be lowered.

Accordingly, an object of the present invention is to provide a resin composition with which a core can be molded with favorable moldability and which can make the defects unlikely to occur to a molded article molded using the core and can make the surface smoothness of the inner surface of the molded article favorable in, for example, powdered metal injection molding.

### Solution to Problem

As a result of diligent studies, the present inventors have found that the problems can be solved by allowing a resin composition to have a particular composition, and thereby completed the present invention described below.

The present invention provides the following [1] to [42]:
[1] A resin composition comprising: a polyvinyl alcohol-based resin; 0.1% by mass or more and 1.2% by mass or less of a surfactant; and at least any one of an inorganic filler and silicone particles,
   wherein the resin composition is free of a plasticizer or comprises 5.0% by mass or less of a plasticizer, and satisfies at least any one of the following requirements (1) and (2):
   (1) a content of the inorganic filler is 1% by mass or more and 30% by mass or less;
   (2) a content of the silicone particles is 0.01% by mass or more and 0.45% by mass or less.
[2] The resin composition according to [1], comprising 1% by mass or more and 30% by mass or less of the inorganic filler.
[3] The resin composition according to [1] or [2], comprising 0.01% by mass or more and 0.45% by mass or less of the silicone particles.
[4] A resin composition comprising: a polyvinyl alcohol-based resin; 0.1% by mass or more and 1.2% by mass or less of a surfactant; and 1% by mass or more and 30% by mass or less of an inorganic filler,
   wherein the resin composition is free of a plasticizer or comprises 5.0% by mass or less of a plasticizer.
[5] A resin composition comprising: a polyvinyl alcohol-based resin; 0.1% by mass or more and 1.2% by mass or less of a surfactant; and 0.01% by mass or more and 0.45% by mass or less of silicone particles,
   wherein the resin composition is free of a plasticizer or comprises 5.0% by mass or less of a plasticizer.
[6] The resin composition according to any one of [1] to [4], wherein the inorganic filler has an average particle size of 30 nm or larger and 20 µm or smaller.
[7] The resin composition according to any one of [1] to [4] and [6], wherein the inorganic filler is at least one selected from the group consisting of silica, titanium oxide, calcium carbonate, mica, talc, and carbon black.
[8] The resin composition according to [7], wherein the inorganic filler is at least one selected from the group consisting of silica and titanium oxide.
[9] The resin composition according to any one of [1] to [4] and [6], wherein the inorganic filler is a water-soluble inorganic filler having a solubility to water at 20°C of 10 g or more and 74 g or less.
[10] The resin composition according to any one of [1] to [4], [6], and [9], wherein the inorganic filler is at least one selected from the group consisting of magnesium sulfate and sodium sulfate.
[11] The resin composition according to any one of [1] to [4] and [6] to [10], wherein the inorganic filler has an average particle size of 30 nm or larger and 6000 nm or smaller.
[12] The resin composition according to any one of [1] to [11], wherein the surfactant is at least one selected from the group consisting of glycerin fatty acid esters, fatty acid metal salts, and fatty acid amides.
[13] The resin composition according to any one of [1] to [12], wherein the surfactant comprises a fatty acid amide of a C12-24 fatty acid.
[14] The resin composition according to any one of [1] to [13], wherein the surfactant comprises a fatty acid metal salt of a C12-24 fatty acid.
[15] The resin composition according to any one of [1] to [14], wherein the surfactant comprises a fatty acid metal salt of magnesium.
[16] The resin composition according to any one of [1] to [15], wherein the surfactant comprises a glycerin fatty acid ester of a C12-24 fatty acid.
[17] The resin composition according to any one of [1] to [16], wherein the surfactant is at least one selected from the group consisting of glycerol monostearate, magnesium stearate, calcium stearate, zinc stearate, and ethylene bis stearic acid amide.
[18] The resin composition according to any one of [1] to [17], wherein the plasticizer is at least one selected from the group consisting of ethylene glycol, glycerin, diglycerin, and trimethylolpropane.
[19] The resin composition according to any one of [1] to [18], wherein the polyvinyl alcohol-based resin has a degree of polymerization of 900 or less.
[20] The resin composition according to any one of [1] to [19], wherein a 4%-by-mass-concentration aqueous solution of the polyvinyl alcohol-based resin has a viscosity at 23°C of 100 mPa·s or lower.
[21] The resin composition according to any one of [1] to [20], wherein the polyvinyl alcohol-based resin has a MFR at 210°C under a load of 2160 g of 1.0 g/10 min or more and 10 g/10 min or less.
[22] The resin composition according to any one of [1] to [21], wherein the polyvinyl alcohol-based resin has a degree of saponification of 70 mol% or more and 99.9 mol% or less.
[23] The resin composition according to any one of [1] to [22], wherein the polyvinyl alcohol-based resin is an unmodified polyvinyl alcohol-based resin.
[24] The resin composition according to any one of [1] to [23], wherein the resin composition is for a core.
[25] The resin composition according to [24], wherein a molding material for obtaining a molded article to be molded outside the core is either a sintering metal material or super engineering plastic.
[26] The resin composition according to [25], wherein the molding material is the sintering metal material.
[27] The resin composition according to [26], wherein the polyvinyl alcohol-based resin has a degree of saponification of 72 mol% or more and 90 mol% or less.
[28] The resin composition according to [25], wherein the molding material is the super engineering plastic.
[29] The resin composition according to [28], wherein the polyvinyl alcohol-based resin has a degree of saponification of 89 mol% or more and 100 mol% or less.
[30] The resin composition according to [28] or [29], wherein a 4%-by-mass-concentration aqueous solution of the polyvinyl alcohol-based resin has a viscosity at 23°C of 12 mPa·s or lower.
[31] The resin composition according to any one of [28] to [30], wherein the polyvinyl alcohol-based resin has a degree of polymerization of 300 or more and 1000 or less.
[32] The resin composition according to any one of [28] to [31], having a content of the surfactant of 0.3% by mass or more and 1.0% by mass or less.
[33] The resin composition according to any one of [28] to [32], having a content of the inorganic filler of 5% by mass or more and 30% by mass or less.
[34] The resin composition according to any one of [28] to [33], wherein the super engineering plastic is at least one selected from the group consisting of polyphenylene sulfide, polyether ether ketone, liquid crystal polymer, polyimide, polyamide-imide, polyetherimide, polyphenylsulfone, polysulfone, polyethersulfone, polyarylates, and fluororesins.
[35] The resin composition according to any one of [28] to [34], wherein the super engineering plastic is at least one selected from the group consisting of polyether ether ketone, polyethersulfone, and polyphenylenesulfide.
[36] The resin composition according to any one of [1] to [35], wherein the resin composition comprises the inorganic filler, the inorganic filer has an average particle size of smaller than 1000 nm, and the resin composition has a content of the inorganic filler of 5% by mass or more and 30% by mass or less.
[37] The resin composition according to any one of [1] to [35], wherein the resin composition comprises the inorganic filler, the inorganic filler has an average particle size of 1000 nm or larger, and the resin composition has a content of the inorganic filler of 1% by mass or more and 15% by mass or less.
[38] A method for producing a molded article comprising:
   a step of molding a core from the resin composition according to any one of [1] to [37];
   a step of disposing the core in a mold;
   a step of injecting a molding material into a cavity formed by the mold and the core to mold a molded article; and
   a step of taking out the molded article from inside of the mold and removing the core after molding of the molded article.
[39] The method for producing a molded article according to [38], wherein the molding material is either a sintering metal material or super engineering plastic.
[40] The method for producing a molded article according to [38] or [39], wherein the molding material is the sintering metal material, and the molded article from which the core has been removed is further sintered to give a sintered molded article.
[41] The method for producing a molded article according to any one of [38] to [40], wherein the core is removed by being dissolved with water.
[42] A core comprising the resin composition according to any one of [1] to [37].

### Advantageous Effects of Invention

According to the resin composition of the present invention, a core can be molded with favorable moldability, and defects are made unlikely to occur to a molded article obtained using the core and the surface smoothness of the inner surface of the resultant molded article can be made favorable in, for example, powdered metal injection molding.

### Description of Embodiments

Hereinafter, the present invention will be described in more detail with reference to embodiments.

### <Resin Composition>

A resin composition of the present invention comprises a polyvinyl alcohol-based resin, a surfactant, and at least any one of an inorganic filler and a silicone resin.

Accordingly, in one embodiment of the present invention, the resin composition of the present invention comprises a polyvinyl alcohol-based resin, a surfactant, and an inorganic filler. Further, in another embodiment of the present invention, the resin composition comprises a polyvinyl alcohol-based resin, a surfactant, and a silicone resin.

Furthermore, the resin composition of the present invention may further comprise a plasticizer, but does not have to comprise the plasticizer.

Hereinafter, each component that composes the resin composition will be described in detail.

### (PVA-based Resin)

The resin composition of the present invention comprises a polyvinyl alcohol-based resin (also referred to as "PVA-based resin"). The PVA-based resin is obtained by polymerizing a vinyl ester and saponifying, that is, hydrolyzing, a resultant polymer.

As the vinyl ester, vinyl acetate, vinyl formate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate, vinyl benzoate, or the like can be used. Among these, the vinyl ester is preferably vinyl acetate.

The PVA-based resin may be unmodified PVA or may be modified PVA, but is preferably unmodified PVA in view of availability, easiness of molding by heating, and water solubility. Unmodified PVA refers to polyvinyl alcohol obtained by saponifying a polyvinyl ester.

In addition, examples of modified PVA include modified PVA obtained by saponifying a copolymer of a vinyl ester and an additional monomer. Examples of the additional monomer include a monomer other than the vinyl ester, the monomer having a carbon-carbon double bond, such as a vinyl group.

Specific examples thereof include olefins, (meth)acrylic acid and salts thereof, (meth)acrylic acid esters, unsaturated acids other than (meth)acrylic acid, and salts and esters thereof, (meth)acrylamides, N-vinyl amides, vinyl ethers, nitriles, halogenated vinyls, allyl compounds, vinyl silyl compounds, isopropenyl acetate, sulfate group-containing or sulfonic acid group-containing compounds, and amino group-containing compounds.

Examples of the olefins include ethylene, propylene, 1-butene, and isobutene. Examples of the (meth)acrylic acid esters include (meth)acrylic acid alkyl esters having a C1-10, preferably C1-2, alkyl group. Specific examples of (meth)acrylic acid alkyl esters include methyl (meth)acrylate, ethyl (meth)acrylate, n-propyl (meth)acrylate, i-propyl (meth)acrylate, n-butyl (meth)acrylate, and 2-ethylhexyl (meth)acrylate.

Examples of the unsaturated acids other than (meth)acrylic acid, and salts and esters thereof include maleic acid and salts thereof, maleic acid esters, itaconic acid and salts thereof, itaconic acid esters, methylenemalonic acid and salts thereof, and methylenemalonic acid esters.

Examples of the (meth)acrylamides include acrylamide, n-methylacrylamide, N-ethylacrylamide, and N,N-dimethylacrylamide. Examples of the N-vinyl amides include N-vinylpyrrolidone. Examples of the vinyl ethers include methyl vinyl ether, ethyl vinyl ether, n-propyl vinyl ether, i-propyl vinyl ether, and n-butyl vinyl ether.

Examples of the nitriles include (meth)acrylonitrile. Examples of the halogenated vinyls include vinyl chloride and vinylidene chloride. Examples of the allyl compounds include allyl acetate and allyl chloride. Examples of the vinyl silyl compounds include vinyl trimethoxysilane.

Examples of the sulfate group-containing or sulfonic acid group-containing compounds include (meth)acrylamide alkane sulfonic acids, such as (meth)acrylamide propanesulfonic acid, and salts thereof, and olefin sulfonic acids, such as ethylenesulfonic acid, allylsulfonic acid, and methallylsulfonic acid, or salts thereof.

Examples of the amino group-containing compounds include allylamine, polyoxyethylene allylamine, polyoxypropylene allylamine, polyoxyethylene vinylamine, and polyoxypropylene vinylamine.

These comonomers may be used singly, or two or more thereof may be used together.

When the comonomer is copolymerized into modified PVA, the amount of modification is preferably 15 mol% or less, more preferably 5 mol% or less. Further, from the viewpoint of exhibiting the performance and function according to the comonomer by modification, and other viewpoints, the amount of modification is, for example, 1 mol% or more.

In addition, modified PVA may be modified PVA obtained by adding a carboxyl group, a sulfonic acid group, or a pyrrolidone cyclic group to PVA by graft polymerization or the like.

The degree of polymerization of the PVA-based resin is preferably 900 or less. By setting the degree of polymerization to 900 or less, swelling properties are lowered, so that when the resin composition is used as a core, swelling before dissolving the core is prevented and occurrence of defects to the outside molded article due to the swelling of the core can be suppressed. From the viewpoint of low swelling properties, the degree of polymerization of the PVA-based resin is more preferably 800 or less.

Further, the degree of polymerization of the PVA-based resin is not particularly limited, but is, from the viewpoint of moldability and the like in molding a core, pellets, or the like from the resin composition, preferably 300 or more, more preferably 400 or more, still more preferably 500 or more.

Note that the degree of polymerization of the PVA-based resin can be measured in accordance with JIS K 6726.

The degree of saponification of the PVA-based resin is not particularly limited, but is, for example, 70 mol% or more and 99.9 mol% or less, preferably 72 mol% or more to 95 mol%, more preferably 72 mol% or more and 90 mol% or less.

With regard to the degree of saponification of a PVA-based polymer, by setting the degree of saponification to 72 mol% or more and 90 mol% or less particularly when a molded article to be molded outside the core is a sintering metal material, the PVA-based polymer can be dissolved with hot water of about 60°C. Further, the degree of saponification of the PVA-based polymer is more preferably more than 72 mol% and 90 mol% or less, still more preferably 78 mol% or more and 90 mol% or less.

The degree of saponification is measured in accordance with JIS K6726. The degree of saponification indicates a proportion of units actually saponified into vinyl alcohol units among units that can be converted into vinyl alcohol units by saponification. Note that the method for adjusting the degree of saponification is not particularly limited, and can appropriately be adjusted by, for example, a saponification condition, that is, a hydrolysis condition.

The viscosity of a 4%-by-mass-concentration aqueous solution of the PVA-based resin at 23°C is preferably 100 mPa·s or lower. When the viscosity of the aqueous solution is 100 mPa·s, the swelling properties are low, so that in the case where the resin composition is used as a core, swelling before dissolving the core is prevented and the occurrence of the defects to the outside molded article by the swelling of the core can be suppressed. From the viewpoint of the swelling properties, the viscosity of the aqueous solution is more preferably 50 mPa·s or lower, still more preferably 20 mPa·s or lower, even still more preferably 15 mPa·s or lower, particularly preferably 12 mPa·s or lower. The viscosity of the aqueous solution is not particularly limited, but is, from the viewpoint of the moldability of a core itself, and the moldability and the like in obtaining pellets composed of the resin composition, preferably 2 mPa·s or higher, preferably 3 mPa·s or higher, still more preferably 4 mPa·s or higher.

The viscosity of the 4%-by-mass-concentration aqueous solution is measured with a B type viscometer in accordance with the JIS-Z-8803:2011 method.

MFR (Melt Flow Rate) of the PVA-based resin at 210°C under a load of 2160 g is preferably 0.5 g/10 min or more and 10 g/10 min or less. By setting MFR within the range, the moldability in molding a core or pellets from the resin composition is made favorable. In addition, the surface of the core becomes easily smoothed, and thereby the surface smoothness and the like of a molded article molded using the core are easily made favorable.

From the viewpoint of making the moldability of a core more favorable, MFR of the PVA-based resin is more preferably 1.0 g/10 min or more and 8 g/10 min or less, still more preferably 1.5 g/10 min or more and 6 g/10 min or less.

MFR (Melt Flow Rate) is measured in accordance with ASTM-D-1238.

When the PVA-based resin is used for a core, and a molding material thereof is super engineering plastic, the degree of saponification is preferably 89 mol% or more and 100 mol% or less, and the viscosity of the 4%-by-mass-concentration aqueous solution at 23°C is preferably 12 mPa·s or lower because the injection molding temperature is generally higher than that for a sintering metal powder. Further, from the viewpoint of water solubility, the degree of polymerization is preferably 300 or more and 1000 or less, more preferably 500 or more and 800 or less.

The content of the PVA resin in the resin composition is, for example, 60% by mass or more, preferably 60% by mass or more and 98.9% by mass or less, based on the total amount of the resin composition. In addition, when the resin composition comprises silicone particles, the content of the PVA resin may be 60% by mass or more and 99.89% by mass or less. By setting the content of the PVA-based resin to the upper limit or lower, the surfactant, the inorganic filler, the silicone particles, and the like can be contained in the resin composition within desired ranges. Further, by setting the content of the PVA-based resin to 60% by mass or more, the moldability of a core itself, and the like are easily made favorable. From these viewpoints, the content of the PVA resin body in the resin composition is more preferably 65% by mass or more, still more preferably 75% by mass or more, and is more preferably 98% by mass or less, still more preferably 96% by mass or less.

### (Surfactant)

The resin composition of the present invention comprises a surfactant. When the resin composition comprises a surfactant in addition to at least any one of an inorganic filler and silicone particles, which will be described later, thereby the releasability to a molded article outside a core in the case where the resin composition is used for the core is improved in addition to the heat resistance. Therefore, the inner surface of the molded article is not roughened when the core is removed, so that a molded article having an inner surface having high surface smoothness is obtained.

The surfactant is a compound having a hydrocarbon moiety (for example, C12- or higher-aliphatic hydrocarbon moiety) and a polar group moiety (such as a hydroxy group, an amino group, an ether group, an amide group, an anion, or a cation) in one molecule and having surface activity. Examples of the surfactant include a nonionic surfactant, an anionic surfactant, a cationic surfactant, and an amphoteric ionic surfactant.

Examples of the nonionic surfactant include an ether-based surfactant, an ester-based surfactant, an ether/ester-based surfactant, an amide-based surfactant, and an amine-based surfactant.

Examples of the ether-based surfactant include: polyoxyalkylene alkyl ethers, such as polyoxyethylene-2-ethylhexyl ether, polyoxyethylene isodecyl ether, polyoxyethylene lauryl ether, polyoxycetyl ether, polyoxyethylene stearyl ether, polyoxyethylene behenyl ether, polyoxypropylene stearyl ether, and a polyoxyethylene-polyoxypropylene-alkyl ether; and polyoxyalkylene alkenyl ethers, such as polyoxyethylene oleyl ether.

The ester-based surfactant is typically a surfactant having a fatty acid ester structure in the molecule. The number of carbon atoms of the fatty acid in the fatty acid ester is, for example, 12 to 24, preferably about 14 to about 20. Specific examples of the ester-based surfactant include: polyoxyalkylene fatty acid esters, such as polyoxyethylene monolaurate, polyoxyethylene monostearate, polyoxyethylene monooleate, polyethylene glycol distearate, polyethylene glycol dioleate, and polypropylene glycol distearate; glycerin fatty acid esters, such as glycerol monolaurate, glycerol monostearate, glycerol monooleate, diglycerol monostearate, triglycerol monostearate, glycerol dilaurate, glycerol distearate, glycerol dioleate, diglycerol distearate, and triglycerol distearate; and sorbitan fatty acid esters, such as sorbitan monocaprylate, sorbitan monolaurate, sorbitan monomyristate, sorbitan monopalmitate, sorbitan monostearate, sorbitan monooleate, sorbitan sesquioleate, and sorbitan trioleate.

Examples of the ether/ester-based surfactant include alkylene oxide-added sorbitan fatty acid esters, such as polyoxyethylene sorbitan monolaurate, polyoxyethylene sorbitan monostearate, polyoxyethylene sorbitan monooleate, and polyoxyethylene sorbitan trioleate.

The amide-based surfactant is typically a surfactant having a fatty acid amide structure in the molecule, and the number of carbon atoms of the fatty acid in the fatty acid amide is, for example, 12 to 24, preferably about 14 to about 20. Specific examples of the amide-based surfactant include: fatty acid alkanolamides, such as coconut fatty acid diethanolamide, tallow fatty acid diethanolamide, lauric acid diethanolamide, oleic acid diethanolamide, coconut fatty acid monoethanolamide, and lauric acid monoisopropanolamide; and fatty acid amides, such as stearic acid monoamide, oleic acid monoamide, erucic acid monoamide, ethylene bis stearic acid amide, and ethylene bis oleic acid amide.

Examples of the amine-based surfactant include: polyalkylene alkylamines, such as polyoxyethylene laurylamine, polyoxyethylene coconut alkylamine, and polyoxyethylene stearylamine; and polyalkylene alkenyl amines, such as polyoxyethylene oleylamine. In addition, the amine-based surfactant may be a diamine type surfactant, such as a polyoxyethylene alkyl propylenediamine.

Examples of the anionic surfactant include alkyl sulfonates, such as a 2-ethylhexyl sulfonate, a decyl sulfonate, a dodecyl sulfonate, a tetradecyl sulfonate, a hexadecyl sulfonate, and an octadecyl sulfonate; polyalkylene alkyl ether sulfonates, such as a polyoxyethylene lauryl ether sulfonate; and ester sulfonates, such as a dibutyl sulfosuccinate salt, a dioctyl sulfosuccinate salt, and a dodecyl sulfoacetate salt.

Further, examples of the anionic surfactant also include a fatty acid metal salt. Examples of the fatty acid metal salt include a metal salt of C12-24, preferably C14-20, fatty acid and a metal, such as sodium, potassium, magnesium, or calcium. In addition, the metal may be zinc. The metal is preferably potassium, magnesium, or zinc, and among these, the metal is more preferably magnesium. Specific examples of the fatty acid metal salt include sodium laurate, sodium myristate, sodium palmitate, sodium tallowate, sodium stearate, sodium oleate, potassium laurate, potassium myristate, potassium palmitate, potassium tallowate, potassium stearate, potassium oleate, magnesium laurate, magnesium myristate, magnesium palmitate, magnesium tallowate, magnesium stearate, magnesium oleate, calcium laurate, calcium myristate, calcium palmitate, calcium tallowate, calcium stearate, calcium oleate, and zinc stearate.

Examples of the cationic surfactant include: alkylamine salts, such as stearylamine acetate; and quaternary ammonium salts, such as lauryl trimethyl ammonium chloride, stearyl trimethyl ammonium chloride, cetyl trimethyl ammonium chloride, distearyl dimethyl ammonium chloride, and alkylbenzyl dimethyl ammonium chloride.

Examples of the amphoteric surfactant include coconut oil dimethyl aminoacetic acid betaine, coconut oil fatty acid amide propyl dimethyl aminoacetic acid betaine, palm kernel oil fatty acid amide propyl dimethyl aminoacetic acid betaine, and lauric acid amide propyl dimethyl aminoacetic acid betaine.

One of the above-described surfactants may be used singly, or two or more thereof may be used together.

The surfactant, among those described above, preferably has high lubricity from the viewpoint of enhancing the releasability of a core to the outer molded article and improving the surface smoothness. Among the surfactants described above, the surfactant is preferably at least one selected from the group consisting of glycerin fatty acid esters, fatty acid amides, and fatty acid metal salts, and is more preferably a glycerin fatty acid ester among these surfactants.

Further, among the glycerin fatty acid esters, the surfactant is more preferably a glycerin fatty acid monoester, which is a monoester of glycerol and a fatty acid, most preferably glycerol monostearate.

Further, among the fatty acid amides, the surfactant is more preferably a bis fatty acid amide, still more preferably an ethylene bis fatty acid amide, even still more preferably ethylene bis stearic acid amide. Further, among the fatty acid metal salts, the surfactant is more preferably a stearic acid metal salt, still more preferably magnesium stearate.

### (Inorganic Filler)

The resin composition of the present invention comprises any one of an inorganic filler and a silicone resin. Accordingly, the resin composition of the present invention comprises an inorganic filler in one embodiment. When the resin composition comprises an inorganic filler, thereby the heat resistance is improved, and when the inorganic filler is used together with the surfactant, thereby a molded article having an inner surface having high surface smoothness is obtained. Further, when the resin composition comprises an inorganic filler, thereby the swelling properties to water and the like are lowered. Accordingly, when the resin composition is used as a core, melting of the core in molding the outside molded article and swelling of the core in dissolving the core with water are prevented, so that the occurrence of the defects to the outside molded article due to the swelling or melting of the core, and other problems can be suppressed.

The inorganic filler may be a non-water-soluble inorganic filler or a water-soluble inorganic filler. These inorganic fillers may be used singly, or two or more of these inorganic fillers may be used together. Examples of the non-water-soluble inorganic filler include silica, titanium oxide, calcium carbonate, mica, talc, and carbon black. Among these, the non-water-soluble inorganic filler is preferably at least one selected from the group consisting of titanium oxide and silica from the viewpoint that wastewater produced after using the resin composition of the present invention in the case where the resin composition of the present invention is dissolved in water for use is unlikely to give an adverse influence on human bodies and other viewpoints. When titanium oxide or silica is used, the surface smoothness of the inner surface of a molded article molded using a core is likely to be improved more, and further, the defects of the molded article molded with the core can more effectively be prevented.

Further, the water-soluble inorganic filler preferably has a solubility to water at 20°C of 10 g or more and 74 g or less. Note that the solubility herein refers to a solubility to 100 g of water. Examples of such a water-soluble inorganic filler include potassium azide (solubility 50.8 g), barium nitrite (solubility 72.8 g), magnesium sulfate (solubility 33.7 g), sodium sulfate (solubility 19.5 g), and potassium chloride (solubility 34.2 g). When the solubility is 74 g or less, moisture in PVA used as a binder and moisture in the air are unlikely to be absorbed, and therefore the water-soluble inorganic filler can suitably be used for hot-melt molding, such as pelletizing and injection molding.

From the viewpoint of availability, dangerousness, an influence on a human body, transparency of wastewater, and the like, the water-soluble inorganic filler is preferably at least any one of magnesium sulfate and sodium sulfate.

Note that as described above, the inorganic filler may be a non-water-soluble inorganic filler, and accordingly the solubility to water of the inorganic filler may be 0 g or more.

The inorganic filler has an average particle size of, for example, 30 nm or larger and 20 µm or smaller. By setting the average particle size to 30 nm or larger and 20 µm or smaller, the heat resistance and low swelling properties of a core to be molded from the resin composition can be secured and the defects and the like of a molded article can be prevented without losing the smoothness of the inner surface of the molded article molded using the core. The inorganic filler preferably has an average particle size of 15 µm or smaller, more preferably 12 µm or smaller, still more preferably 10 µm or smaller, even still more preferably 8 µm or less.

Among the ranges described above, the inorganic filler preferably has an average particle size of 6000 nm or smaller. By setting the average particle size to 6000 nm or smaller, roughening of the inner surface of a molded article by the inorganic filler is prevented, making the smoothness of the inner surface of the molded article more excellent. From the viewpoint of improving the smoothness of the inner surface of a molded article, the inorganic filler more preferably has an average particle size of 5000 nm or smaller, still more preferably 2000 nm or smaller, even still more preferably smaller than 1000 nm.

Further, from the viewpoint of securing the low swelling properties of a core and preventing the defects of a molded article, the inorganic filler preferably has an average particle size of 150 nm or larger, more preferably 250 nm or larger.

Note that the average particle sizes of the inorganic filler, and the silicone particles, which will be described later, can be measured in accordance with JIS-Z-8827: 2018 Image analysis methods.

### (Silicone Particles)

The resin composition of the present invention may comprise silicone particles in place of the inorganic filler, or may comprise silicone particles together with the inorganic filler. By using the silicone particles, the releasability from a sintering metal material, super engineering plastic, or the like, and the surface smoothness of a molded article are made favorable. In addition, the defects are made unlikely to occur to a molded article when it is molded with, for example, a sintering metal material. Further, the dissolution speed in dissolving a core with water can be made faster.

When the resin composition of the present invention comprises silicone particles, the silicone particles preferably have a shape of fine powder. The average particle size of the silicone particles is not particularly limited, but is preferably 0.1 µm or larger and 35 µm or smaller, more preferably 0.2 µm or larger and 20 µm or smaller, still more preferably 0.3 µm or larger and 8 µm or smaller.

Examples of the silicone particles include, but not particularly limited to, silicone rubber particles, silicone resin particles, silicone rubber resin composite particles. Examples of the silicone rubber particles include particles of silicone rubber having a structure formed by crosslinking a linear organopolysiloxane, such as linear dimethyl polysiloxane. Further, examples of the silicone resin particles include particles of a silicone resin having a structure formed by three-dimensional network-like crosslinks, and, for example, a polyorganosilsesquioxane cured product represented by (CH₃SiO_{3/2})ₙ (n represents an integer of 1 or more), or the like can be used as the silicone resin. Examples of the silicone rubber resin composite particles include particles formed by covering the surfaces of silicone rubber particles with a silicone resin.

### (Contents of Surfactant, Inorganic Filler, and Silicone Particles)

The resin composition of the present invention comprises 0.1% by mass or more and 1.2% by mass or less of a surfactant, and satisfies at least any one of the following requirements (1) and (2).
(1) The content of the Inorganic filler is 1% by mass or more and 30% by mass or less
(2) The content of the silicone particles is 0.01% by mass or more and 0.45% by mass or less

Accordingly, the resin composition of the present invention comprises 0.1% by mass or more and 1.2% by mass or less of a surfactant and 1% by mass or more and 30% by mass or less of an inorganic filler in one embodiment.

When the content of the surfactant is less than 0.1% by mass or the content of the inorganic filler is less than 1% by mass, it is difficult to exhibit the effect obtained by allowing these to be contained, and in the case where the resin composition of the present invention is used as a core for example, the defects may occur to a resultant molded article, and the surface smoothness of the inner surface of the molded article may be lowered.

Further, when the content of the surfactant is more than 1.2% by mass or the content of the inorganic filler is more than 30% by mass, slipping may occur in molding the resin composition into a core or the like, and the fluidity and mixability in molding the resin composition may be lowered, so that the moldability or the like in molding, for example, a core or pellets from the resin composition is lowered.

From the viewpoint of enhancing the surface smoothness of the inner surface of a molded article molded using a core and suppressing the defects which occur to the molded article while making the moldability of the core or the like favorable, the content of the surfactant is preferably 0.2% by mass or more and 1.1% by mass or less, more preferably 0.3% by mass or more and 1.0% by mass or less.

Further, from the viewpoint of enhancing the surface smoothness of a molded article molded using a core and suppressing the defects which occur to the molded article while making the moldability of the core or the like favorable, the content of the inorganic filler is preferably 2% by mass or more and 25% by mass or less, more preferably 3% by mass or more and 20% by mass or less, still more preferably 4% by mass or more and 17% by mass or less.

From the viewpoint of effectively suppressing the defects which occur to a molded article while further improving the surface smoothness, the content of the inorganic filler, when the inorganic filler has a size of nano order (that is, when the inorganic filler has an average particle size of smaller than 1000 nm), is preferably relatively large, and is, among the ranges described above, still more preferably 5% by mass or more and 30% by mass or less, even still more preferably 10% by mass or more and 20% by mass or less.

On the other hand, from the viewpoint of further improving the surface smoothness and effectively suppressing the defects while keeping the moldability of a core or the like favorable, the content of the inorganic filler, when the inorganic filler has a size of a micro order (that is, when the inorganic filler has an average particle size of 1000 nm or larger), is preferably relatively small, and is, among the ranges described above, still more preferably 1% by mass or more and 15% by mass or less, even still more preferably 3% by mass or more and 10% by mass or less.

When the resin composition is used for a core, and a molding material in molding of a molded article is super engineering plastic, the content of the surfactant is, among the ranges described above, preferably 0.3% by mass or more and 1.0% by mass or less. By setting the content of the surfactant within the range, the separability from the super engineering plastic in dissolving the core is made favorable. Further, the content of the surfactant is, among the ranges described above, more preferably 0.6% by mass or more and 1.0% by mass or less.

When the resin composition is used for a core, and a molding material in molding of a molded article is super engineering plastic, the content of the inorganic filler is, among the ranges described above, preferably 5% by mass or more and 30% by mass or less. By setting the content of the inorganic filler within the range, the heat resistance of the core is improved. That is, there is an effect such that the deformation of the core can be prevented even when the super engineering plastic comes into direct contact with the core. Further, the content of the inorganic filler is, among these ranges, more preferably 10% by mass or more and 20% by mass or less.

As described above, the resin composition of the present invention may comprise silicone particles. In that case, as described above, the resin composition of the present invention comprises 0.01% by mass or more and 0.45% by mass or less of silicone particles in addition to 0.1% by mass or more and 1.2% by mass or less of a surfactant.

When the content of the surfactant is less than 0.1% by mass or the content of the silicone particles is less than 0.01% by mass, it is difficult to exhibit the effect of allowing these to be contained, and in the case where the resin composition is used as a core for example, the releasability from a sintering metal material, super engineering plastic, and the like is lowered, so that the defects may occur to a resultant molded article. Further, the surface smoothness of the inner surface of the molded article may be lowered.

Further, when the content of the surfactant is more than 1.2% by mass or the content of the silicone particles is more than 0.45% by mass, slipping may occur in molding the resin composition into a core, and the fluidity and mixability in molding the resin composition may be lowered, so that the moldability and the like in molding, for example, a core or pellets from the resin composition are lowered.

When the silicone particles are used, the details on the content of the surfactant are the same as those in the case where the inorganic filler is used, and the description is omitted. The content of the silicone particles is preferably 0.05% by mass or more, more preferably 0.1% by mass or more, and is preferably 0.4% by mass or less, more preferably 0.3% by mass or less.

When the silicone particles are used, the silicone particles may be used in place of the inorganic filler without using the inorganic filler. Similarly, when the inorganic filler is used, the silicone particles do not necessarily have to be used.

The resin composition may comprise both of the inorganic filler and the silicone particles. The contents of the inorganic filler and the silicone particles in that case may satisfy one or both of (1) and (2) described above, but preferably satisfy the both of them. The details on the contents of the inorganic filler and the silicone particles, even when used together, are the same as described above. From the viewpoint of the moldability, the content of the inorganic filler may be 30% by mass or less and the content of the silicone particles may be 0.45% by mass or less in the resin composition.

### (Plasticizer)

In the present invention, the resin composition may comprise a plasticizer or does not necessarily have to comprise a plasticizer, but when the resin composition comprises a plasticizer, the content of the plasticizer is 5.0% by mass or less. The resin composition, when comprising a plasticizer, has high moldability, and the moldability in molding, for example, pellets, core, or the like composed of the resin composition is improved.

On the other hand, when the resin composition comprises a plasticizer in an amount of more than 5.0% by mass, the heat resistance of the resin composition is lowered, and melting or the like occurs on the surface of a core in molding, for example, the outer molded article to roughen the inner surface of the outer molded article, so that a trouble that the surface smoothness is lowered is likely to occur.

In the resin composition, the content of the plasticizer is preferably small, preferably 0% by mass or more and 4% by mass or less, more preferably 0% by mass or more and 2% by mass or less from the viewpoint of the surface smoothness. Note that 0% by mass means that the resin composition is free of a plasticizer.

However, when the resin composition comprises a plasticizer, the content is preferably set to a certain amount or more, preferably, for example, 1% by mass or more from the viewpoint of exhibiting the effect caused by allowing the resin composition to comprise a plasticizer.

When the resin composition is used for a core, and a molding material in molding of a molded article is super engineering plastic, the content of the plasticizer is, among the ranges described above, preferably 0% by mass or more and 3% by mass or less. By setting the content of the plasticizer within the range, the core, when coming into direct contact with the super engineering plastic, does not give an adverse influence on the surface smoothness of the molded article of the super engineering plastic, due to the lowering of the surface smoothness of the core. Among these ranges, the content of the plasticizer is more preferably 0% by mass or more and 2% by mass or less.

Examples of the plasticizer include a polyhydric alcohol. Examples of the polyhydric alcohol include ethylene glycol, glycerin, propylene glycol, diethylene glycol, diglycerin, triethylene glycol, tetraethylene glycol, dipropylene glycol, tripropylene glycol, trimethylolpropane, polyethylene glycol, and polypropylene glycol. Polyethylene glycol and polypropylene glycol herein each having an average molecular weight of 200 or higher and 600 or lower, preferably having an average molecular weight of 250 or higher and 500 or lower can be used. Only one of the polyhydric alcohols which can be used as a plasticizer may be added, or two or more thereof may be added.

The plasticizer is, among those described above, preferably at least one selected from the group consisting of ethylene glycol, glycerin, diglycerin, and trimethylolpropane, and is more preferably at least one selected from the group consisting of glycerin, diglycerin, and trimethylolpropane.

### (Other Components)

The resin composition may comprise an antioxidant. As the antioxidant, a known antioxidant, such as a phenol-based antioxidant, a phosphorus antioxidant, an amine-based antioxidant, or a sulfur-containing antioxidant, can be used, and, among these, a phenol-based antioxidant and a phosphorus antioxidant are preferably used together. Further, an antioxidant having a phenol-based functional group and a phosphorus functional group together in one molecule can also suitably be used.

The content of the antioxidant in the resin composition is, for example, 0.1% by mass or more and 5% by mass or less, preferably 0.2% by mass or more and 2% by mass or less.

Examples of the phenol-based antioxidant include: acrylate-based compounds, such as 2-t-butyl-6-(3-t-butyl-2-hydroxy-5-methylbenzyl)-4-methylphenyl acrylate and 2,4-di-t-amyl-6-(1-(3,5-di-t-amyl-2-hydroxyphenyl)ethyl)phenyl acrylate; an alkyl-substituted phenol-based compound, such as 2,6-di-t-butyl-4-methylphenol, 2,6-di-t-butyl-4-ethylphenol, octadecyl-3-(3,5-di-t-butyl-4-hydroxyphenyl)propionate, 2,2'-methylene-bis(4-methyl-6-t-butylphenol), 4,4'-butylidene-bis(4-methyl-6-t-butylphenol), 4,4'-butylidene-bis(6-t-butyl-m-cresol), 4,4'-thiobis(3-methyl-6-t-butylphenol), bis(3-cyclohexyl-2-hydroxy-5-methylphenyl)methane, 3,9-bis(2-(3-(3-t-butyl-4-hydroxy-5-methylphenyl)propionyloxy)-1,1-dimethylethyl)-2,4,8,10-tetraoxaspiro[5,5]undecane, 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis(methylene-3-(3',5'-di-t-butyl-4'-hydroxyphenyl)propionate)methane, or triethylene glycol bis(3-(3-t-butyl-4-hydroxy-5-methylphenyl)propionate); and a triazine group-containing phenol-based compound, such as 6-(4-hydroxy-3,5-di-t-butylanilino)-2,4-bis-octylthio-1,3,5-triazine, 6-(4-hydroxy-3,5-dimethylanilino)-2,4-bis-octylthio-1,3,5-triazine, 6-(4-hydroxy-3-methyl-5-t-butylanilino)-2,4-bis-octylthio-1,3,5-triazine, or 2-octylthio-4,6-bis-(3,5-di-t-butyl-4-oxyanilino)-1,3,5-triazine.

Examples of the phosphorus antioxidant include: a monophosphite-based compound, such as triphenyl phosphite, diphenyl isodecyl phosphite, phenyl diisodecyl phosphite, tris(nonylphenyl) phosphite, tris(dinonylphenyl) phosphite, tris(2-t-butyl-4-methylphenyl) phosphite, tris(cyclohexylphenyl) phosphite, 2,2-methylenebis(4,6-di-t-butylphenyl)octyl phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide, or 10-decyloxy-9,10-dihydro-9-oxa-10-phosphaphenanthrene; and a diphosphite-based compound, such as 4,4'-butylidene-bis(3-methyl-6-t-butylphenyl-di-tridecyl phosphite), 4,4'-isopropylidene-bis(phenyl-di-alkyl(C12-C15) phosphite), 4,4'-isopropylidene-bis(diphenyl monoalkyl(C12-C15) phosphite), 1,1,3-tris(2-methyl-4-di-tridecyl phosphite-5-t-butylphenyl)butane, or tetrakis(2,4-di-t-butylphenyl)-4,4'-biphenylene phosphite. Among these, the phosphorus antioxidant is preferably a monophosphite-based compound.

Examples of the antioxidant having a phenol-based functional group and a phosphorus functional group together include, but not particularly limited to, a phosphorous acid ester-based compound having a phenol skeleton. Specific examples thereof include 6-[3-(3-t-butyl-4-hydroxy-5-methylphenyl)propoxy]-2,4,8,10-tetra-t-butyldibenz[d,f][1,3,2]dioxaphosphepine, 2,10-dimethyl-4,8-di-t-butyl-6-[3-(3,5-di-t-butyl-4-hydroxyphenyl)propoxy]-12H-dibenzo[d,g][1,3,2]dioxaphosphocin,2,4,8,10-tetra-t-butyl-6-[3-(3,5-di-t-butyl-4-hydroxyphenyl)propoxy]dibenzo[d,f][1,3,2]dioxaphosphepine, 2,4,8,10-tetra-t-pentyl-6-[3-(3,5-di-t-butyl-4-hydroxyphenyl)propoxy]-12-methyl-12H-dibenzo[d,g][1,3,2]dioxaphosphocin,2,10-dimethyl-4,8-di-t-butyl-6-[3-(3,5-di-t-butyl-4-hydroxyphenyl)propionyloxy]-12H-dibenzo[d,g][1,3,2]dioxaphosphocin, 2,4,8,10-tetra-t-pentyl-6-[3-(3,5-di-t-butyl-4-hydroxyphenyl)propionyloxy]-12-methyl-12H-dibenzo[d,g][1,3,2]dioxaphosphocin, 2,4,8,10-tetra-t-butyl-6-[3-(3,5-di-t-butyl-4-hydroxyphenyl)propionyloxy]-dibenzo[d,f][1,3,2]dioxaphosphepine, 2,10-dimethyl-4,8-di-t-butyl-6-(3,5-di-t-butyl-4-hydroxybenzoyloxy)-12H-dibenzo[d,g][1,3,2]dioxaphosphocin,2,4,8,10-tetra-t-butyl-6-(3,5-di-t-butyl-4-hydroxybenzoyloxy)-12-methyl-12H-dibenzo[d,g][1,3,2]dioxaphosphocin, 2,10-dimethyl-4,8-di-t-butyl-6[3-(3-methyl-4-hydroxy-5-t-butylphenyl)propoxy]-12H-dibenzo[d,g][1,3,2]dioxaphosphocin, 2,10-di-t-pentyl-4,8-di-t-butyl-6-[3-(3,5-di-t-butyl-4-hydroxyphenyl)propoxy]-12H-dibenzo[d,g][1,3,2]dioxaphosphocin, and 2,4,8,10-tetra-t-butyl-6-[2,2-dimethyl-3-(3-t-butyl-4-hydroxy-5-methylphenyl)propoxy]-dibenzo[d,f][1,3,2]dioxaphosphepine.

Further, the resin composition may appropriately comprise various additives, such as a colorant, a defoamer, an ultraviolet absorber, and an antiseptic, which can be used together with the PVA-based resin.

### [Method for Producing Resin Composition]

The resin composition can be obtained by, for example, adding a surfactant and at least one of an inorganic filler or silicone particles, and additives which are blended additionally as necessary, such as a plasticizer, to a PVA-based resin and mixing them. The method of mixing the respective components of the resin composition is not particularly limited, but mixing may be performed with a known kneading apparatus, and may be performed with an extrusion machine or the like, or when a core is obtained by molding the resin composition by injection molding as will be described later, mixing may be performed, for example, in a cylinder of an injection molding machine.

### [Molding of Core]

The resin composition of the present invention is, for example, a resin composition for a core. The core is used for molding of a molded article outside in injection molding and then removed by dissolution or the like from the outer molded article after molding of the molded article. The method for producing the core with the resin composition is not particularly limited, but the core is preferably molded by injection molding.

The injection molding may be performed with a known injection molding machine. The injection molding machine comprises, for example, a mold, such as a metal mold, that is for molding the core and an injection unit that is connected to the mold and that is for supplying a molding material (resin composition) into the mold.

The injection unit includes, for example, a cylinder and a screw disposed inside the cylinder. The injection unit feeds, ahead of the cylinder, the components charged into the cylinder by rotating the screw while mixing the components, and thereby supplies the fluidized resin composition (molding material) into a metal mold. In the metal mold, the supplied resin composition (molding material) is injected into a cavity formed by the metal mold, and thus the core is produced. The molding temperature in injection molding of the core is not particularly limited and is, for example, about 160 to about 220°C.

Further, pelletizing may preliminarily be performed on the resin composition to make the resin composition into pellets before the resin composition is charged into the injection molding machine. Subsequently, the resin composition in the form of pellets may be charged into the injection molding machine for injection-molding the core. Pelletizing is not particularly limited and is performed by, for example, extrusion. Pelletizing may be performed at an extrusion temperature of, for example, about 160 to about 220°C.

### [Method for Producing Molded Article]

The core obtained in the manner as described above may be used for producing a molded article. The molded article may be produced by, for example, injection molding, and the injection molding may be performed with a known injection molding machine. The details on the injection molding machine are as described above, and the injection molding machine may include a mold, such as a metal mold, and an injection unit.

In the method for producing a molded article, the core obtained in the manner as described above is disposed in a mold, and a molding material is subsequently injected into a cavity formed by the mold and the core to mold a molded article. Thereafter, the molded article is taken out of the mold, and the core is removed to give the molded article.

The molded article herein may be taken out of the mold together with the core as a composite. The method of removing the core from the composite taken out is not particularly limited, but preferably, the core may be removed by dissolving at least a part of the core. Specifically, the core may be removed from the composite by immersing the composite in water, preferably hot water heated to about 40°C or higher and about 80°C or lower, to dissolve at least a part of the core. Water in which the composite is immersed may be subjected to stirring or the like. Water for removing the core may be water alone but may be acidic water, alkaline water, or the like, to which any of various acidic substances, alkaline substances, or the like is added.

Further, when sintering, which will be described later, is performed, the core may be removed by pyrolyzing the core by heating during sintering.

The molding material which is used for obtaining the molded article is preferably either a sintering metal material or super engineering plastic.

The sintering metal material is, for example, a composition for sintering comprising a metal powder and a binder. Examples of the metal powder include, but not particularly limited to, a nickel powder, a titanium powder, an aluminum powder, a copper powder, an iron powder, a carbonyliron powder, a stainless steel powder, and a nickel alloy, such as Inconel. Further, examples of the binder include: olefin-based resins, such as polyethylene and polypropylene; and polymer components, such as polystyrene and a polyamide. In addition, any of various additives, such as paraffin-based waxes, stearic acid, and amide-based lubricants, may be blended in the polymer component.

When the sintering metal material is used as a molding material, a sintered molded article composed of the metal powder is obtained by sintering a molded article (preferably a molded article after removing a core) taken out of a mold. The temperature during sintering herein is not particularly limited as long as the binder is pyrolyzed at the temperature, and the temperature may be a temperature of, for example, about 250 to about 2500°C, preferably at a temperature of about 500 to about 2500°C.

With regard to a molded article obtained by using the sintering metal material, the surface smoothness of the inner surface is made favorable and the defects can be made unlikely to occur by using the resin composition as a core.

Examples of the super engineering plastic include a polymer that can have optical anisotropy even in a flowing state. Specific examples of the super engineering plastic include plastics having high heat resistance, such as polyphenylene sulfide (PPS), polyether ether ketone (PEEK), liquid crystal polymer (LCP), polyimide (PI), polyamide-imide (PAI), polyether imide (PEI), polyphenyl sulfone (PPSU), polysulfone (PSF), polyether sulfone (PES), polyarylate (PAR), and fluoro resins such as polyvinylidene fluoride (PVDF), tetrafluoroethylene-hexafluoropropylene copolymer (FEP), tetrafluoroethylene-ethylene copolymer (ETFE), polychlorotrifluoroethylene (PCTFE), and chlorotrifluoroethylene-ethylene copolymer (ECTFE). Among these, the super engineering plastic is preferably PEEK, PES, or PPS.

By using the super engineering plastic, a molded article having favorable heat resistance, durability, mechanical strength, and the like is obtained. Also, when a molded article is obtained using the super engineering plastic as a molding material, a molded article such that the releasability from a core is high, and the inner surface has high surface smoothness can be obtained by using the resin composition.

The outer molded article molded with the core is, for example, a molded article having a hollow part, and more specific examples thereof include a cylindrical body, a bottomed cylindrical body, and a molded article that has a hollow or specific cavity shape for molding, for example, a head of a golf club.

With regard to the outer molded article, a molded article having a hollow part having a complicated shape can be obtained by using a core. Further, various molded articles, such as a cylindrical body, may have a straight shape, but the shape is not limited to be straight, and the molded articles may have any shape of an L shape, an S shape, a T shape, and the like. These cylindrical bodies having a L shape, an S shape, or the like can be used as, for example, joints.

Further, the cylindrical body or the bottomed cylindrical body may have a shape such that the diameter changes along the axis direction.

In the present invention, even when a molded article having a complicated shape is molded, the releasability of the molded article from a core is made favorable by using the core composed of the resin composition having the above-described combination, and the inner surface smoothness is improved due to small surface roughness of the molded article. Further, the defects and the like of the molded article can effectively be prevented.

Specifically, the surface roughness of the inner surface of a molded article (a sintered molded article when the molding material is a sintering metal material) which is obtained by the production method and which has a hollow part is preferably 0.5 mm or less. By setting the surface roughness of the inner surface to 0.5 mm or less, the inner surface smoothness of the molded article is made favorable, so that the molded article can be put into practical use. From the viewpoint of improving the inner surface smoothness of a molded article, the surface roughness is more preferably 0.3 mm or less, still more preferably 0.2 mm or less. The surface roughness is better when it is lower, and the lower limit thereof is 0 mm. Note that the surface roughness refers to an arithmetic average surface roughness Ra measured using a contact surface roughness meter (such as Talysurf and SURFCOM).

### Examples

The present invention will be described in more detail with reference to Examples, but the present invention is not limited at all to these Examples.

The evaluation methods in the present Example are as follows.

### [Moldability]

In each Example and Comparative Example, moldability during pelletizing and core molding was evaluated according to the following evaluation criteria.
A: A problem does not occur both during pelletizing and during core molding, and accordingly the moldability is excellent.
B: Moldability is unstable at least either during pelletizing or during core molding, but pellets and a core can be molded without any practical problem.
C: Damage occurs to pellets during pelletizing, or molding cannot properly be performed during core molding, and accordingly there is a problem in moldability for pellets or a core.

### [Surface Roughness of Sintered Molded Article]

The surface roughness of the inner peripheral surface of each tubular sintered molded article obtained in Examples and Comparative Examples was measured and evaluated according to the following evaluation criteria. Note that the surface roughness refers to an arithmetic average surface roughness Ra measured using a contact surface roughness meter ("Talysurf" manufactured by Taylor Hobson Ltd. or "SURFCOM" manufactured by TOKYO SEIMITSU CO., LTD.).

### (Evaluation Criteria)

AA: Surface roughness is 0.2 mm or less
A: Surface roughness is more than 0.2 mm and 0.3 mm or less
B: Surface roughness is more than 0.3 mm and 0.5 mm or less
C: Surface roughness is more than 0.5 mm

### [Defects of Sintered Molded article]

The appearance of each sintered molded article finally obtained was observed to check whether defects are present or not in the inner surface of the molded article and evaluated according to the following evaluation criteria.
A: Defects are not present.
B: Fine broken pieces adhere to the core to produce fine unevenness on the inside surface.
C: Relatively large defects that can visually be ascertained are present.

### [Releasability and Surface Roughness of Molded article of Super Engineering Plastic]

After a molded article was molded with super engineering plastic, the resultant molded article was cut in half together with the core along the axis direction. Thereafter, the releasability between the core and the molded article were checked and evaluated according to the following evaluation criteria.

Further, the surface roughness of the inner surface after removing the core was measured for the molded article cut in half and the surface roughness was also evaluated. The measuring method and evaluation criteria with regard to the surface roughness of the molded article cut in half were the same as those in the case of the sintered molded article.

### (Releasability)

A: The core can easily be released from the molded article with fingers.
C: The core cannot easily be released from the molded article with fingers.

### (Example 1)

The following polyvinyl alcohol, antioxidant, surfactant, and inorganic filler were used.
1) Polyvinyl alcohol: trade name "SELVOL 205," manufactured by SEKISUI SPECIALTY CHEMICALS CO., LTD., degree of saponification 89, degree of polymerization 500 to 800, MFR at 210°C under a load of 2160 g 3.5/10 min, viscosity of a 4%-by-mass-concentration at 23°C 5.2 to 6.2 mPa·s
2) Antioxidant: trade name "SUMILIZER GP," manufactured by SUMITOMO CHEMICAL COMPANY, LIMITED, 6[3-(3-t-butyl-4-hydroxy-5-methylphenyl)propoxy]-2,4,8,10-tetra-t-butyldibenz[d,f][1,3,2]dioxaphosphepine
3) Surfactant: trade name "ELECTROSTRIPPER TS5," manufactured by Kao Corporation, glycerol monostearate
4) Inorganic filler: trade name "TIPAQUE PF690," manufactured by ISHIHARA SANGYO KAISHA, LTD., titanium oxide, average particle size: 300 nm

The antioxidant, the surfactant, and the inorganic filler were added to the polyvinyl alcohol according to the blending amounts described in Table 1, and pelletizing was performed using an extrusion machine (product number "TEM26SX," manufactured by TOSHIBA MACHINE CO., LTD.) at an extrusion temperature of 190 to 210°C to give pellets.

A core was molded using the obtained pellets with an injection molding apparatus (product number "J30ADS," manufactured by The Japan Steel Works, Ltd.). Molding was performed using the same molding apparatus at a temperature of 180 to 200°C in such a way that the core was disposed in the metal mold, stainless steel clay for sintering comprising a stainless steel powder for sintering and a binder composed of polyethylene was disposed along the outer periphery of the core, and then the metal mold was closed.

Next, a composite comprising the core and the outer molded article was taken out of the metal mold and was then immersed into hot water of 60°C. The core was dissolved over about 6 hours while the water was stirred. The outer molded article left was sintered by heating at a temperature of 1300°C for 60 seconds to give a cylindrical body (sintered molded article) made of stainless steel.

### (Example 2)

Pellets were obtained in the same manner as in Example 1, except that the proportions of the respective components added were changed as shown in Table 1. Thereafter, a core was molded and a cylindrical body made of stainless steel was subsequently molded in the same manner as in Example 1. Table 1 shows results of the evaluations for the resultant molded article.

In the present example, after the core was molded, a molded article (cylindrical body) made of a PEEK resin was also obtained using the core and using the PEEK resin as a molding material at a molding temperature of 250°C.

### (Example 3)

Pellets were obtained in the same manner as in Example 1, except that the proportions of the respective components added were changed as shown in Table 1. Thereafter, a core was molded and a cylindrical body made of stainless steel was subsequently molded in the same manner as in Example 1.

In the present example, after the core was molded, a molded article (cylindrical body) made of a PEEK resin was also obtained using the core and using the PEEK resin as a molding material at a molding temperature of 250°C.

### (Example 4)

Pellets were obtained in the same manner as in Example 1, except that the proportions of the respective components added were changed as shown in Table 1. Thereafter, a core was molded and a cylindrical body made of stainless steel was subsequently molded in the same manner as in Example 1.

### (Example 5)

Pellets were obtained in the same manner as in Example 1, except that 5% by mass of diglycerin as a plasticizer for the polyvinyl alcohol was added and that the blending amounts of the respective components were changed as described in Table 1. Thereafter, a core was molded and a cylindrical body made of stainless steel was subsequently molded in the same manner as in Example 1.

### (Example 6)

Pellets were obtained in the same manner as in Example 1, except that 5% by mass of glycerin as a plasticizer for the polyvinyl alcohol was added and that the blending amounts of the respective components were changed as described in Table 1. Thereafter, a core was molded and a cylindrical body made of stainless steel was subsequently molded in the same manner as in Example 1.

### (Example 7)

Pellets were obtained in the same manner as in Example 1, except that 5% by mass of trimethylolpropane (TMP) as a plasticizer for the polyvinyl alcohol was added and that the blending amounts of the respective components were changed as described in Table 1. Thereafter, a core was molded and a cylindrical body made of stainless steel was subsequently molded in the same manner as in Example 1.

### (Example 8)

Pellets were obtained in the same manner as in Example 1, except that the proportions of the respective components added were changed as shown in Table 1. Thereafter, a core was molded and a cylindrical body made of stainless steel was subsequently molded in the same manner as in Example 1.

### (Example 9)

Pellets were obtained in the same manner as in Example 1, except that the proportions of the respective components added were changed as shown in Table 1. Thereafter, a core was molded and a cylindrical body made of stainless steel was subsequently molded in the same manner as in Example 1.

### (Example 10)

Pellets were obtained in the same manner as in Example 1, except that the surfactant was changed to trade name "MAGNESIUM STEARATE MG" (magnesium stearate) manufactured by NOF CORPORATION and that the proportions of the respective components added were changed as shown in Table 1. Thereafter, a core was molded and a cylindrical body made of stainless steel was subsequently molded in the same manner as in Example 1.

### (Example 11)

Pellets were obtained in the same manner as in Example 1, except that the surfactant was changed to trade name "ALFLOW H50" (ethylene bis stearic acid amide) manufactured by NOF CORPORATION and that the proportions of the respective components added were changed as shown in Table 1. Thereafter, a core was molded and a cylindrical body made of stainless steel was subsequently molded in the same manner as in Example 1.

### (Example 12)

Pellets were obtained in the same manner as in Example 1, except that the surfactant was changed to trade name "SC-P" (calcium stearate) which is a product manufactured by Sakai Chemical Industry Co., Ltd. and that the proportions of the respective components added were changed as shown in Table 1. Thereafter, a core was formed and a cylindrical body made of stainless steel was subsequently molded in the same manner as in Example 1.

### (Example 13)

Pellets were obtained in the same manner as in Example 1, except that the surfactant was changed to trade name "SPZ 100F" (zinc stearate) manufactured by Sakai Chemical Industry Co., Ltd. and that the proportions of the respective components added were changed as shown in Table 1. Thereafter, a core was formed and a cylindrical body made of stainless steel was subsequently molded in the same manner as in Example 1.

### (Example 14)

Pellets were obtained in the same manner as in Example 1, except that the inorganic filler was changed to silica particles (trade name "SYLYSIA 358," average particle size: 5000 nm) manufactured by FUJI SILYSIA CHEMICAL LTD. and that the proportions of the respective components added were changed as shown in Table 1. Thereafter, a core was molded and a cylindrical body made of stainless steel was subsequently molded in the same manner as in Example 1.

In the present example, after the core was molded, a molded article (cylindrical body) made of a PEEK resin was also obtained using the core and using the PEEK resin as a molding material at a molding temperature of 250°C.

### (Example 15)

Pellets were obtained in the same manner as in Example 1, except that the inorganic filler was changed to silica particles (trade name "SYLYSIA 780," average particle size: 8000 nm) manufactured by FUJI SILYSIA CHEMICAL LTD. and that the proportions of the respective components added were changed as shown in Table 1. Thereafter, a core was molded and a cylindrical body made of stainless steel was subsequently molded in the same manner as in Example 1.

In the present example, after the core was molded, a molded article (cylindrical body) made of a PEEK resin was also obtained using the core and using the PEEK resin as a molding material at a molding temperature of 250°C.

### (Example 16)

Pellets were obtained in the same manner as in Example 1, except that the inorganic filler was changed to silica particles (trade name "SYLYSIA 358") manufactured by FUJI SILYSIA CHEMICAL LTD. and that the proportions of the respective components added were changed as shown in Table 1. Thereafter, a core was molded and a cylindrical body made of stainless steel was subsequently molded in the same manner as in Example 1.

### (Example 17)

Pellets were obtained in the same manner as in Example 1, except that the inorganic filler was changed to silica particles (trade name "SYLYSIA 358") manufactured by FUJI SILYSIA CHEMICAL LTD. and that the proportions of the respective components added were changed as shown in Table 1. Thereafter, a core was molded and a cylindrical body made of stainless steel was subsequently molded in the same manner as in Example 1.

Note that in injection molding at the time when the core was molded, pellets slipped at the screw in the cylinder to make the injection molding unstable, but the core was able to be molded.

### (Example 18)

Pellets were obtained in the same manner as in Example 1, except that the inorganic filler was changed to carbon black particles (trade name "SEAST-S," average particle size: 30 nm) manufactured by TOKAI CARBON CO., LTD. and that the proportions of the respective components added were changed as shown in Table 2. Thereafter, a core was molded and a cylindrical body made of stainless steel was subsequently molded in the same manner as in Example 1.

### (Example 19)

Pellets were obtained in the same manner as in Example 1, except that the inorganic filler was changed to carbon black particles (trade name "SEAST-S") manufactured by TOKAI CARBON CO., LTD. and that the proportions of the respective components added were changed as shown in Table 2. Thereafter, a core was molded and a cylindrical body made of stainless steel was subsequently molded in the same manner as in Example 1.

### (Example 20)

Pellets were obtained in the same manner as in Example 1, except that the inorganic filler was changed to high-purity anhydrous magnesium sulfate particles (particle size 20 µm) manufactured by Tomita Pharmaceutical Co., Ltd. and that the proportions of the respective components added were changed as shown in Table 2. Thereafter, a core was molded and a cylindrical body was subsequently molded with a PEEK resin in the same manner as in Example 1.

### (Example 21)

Pellets were obtained in the same manner as in Example 1, except that the inorganic filler was changed to high-purity anhydrous sodium sulfate particles manufactured by Tomita Pharmaceutical Co., Ltd. and that the proportions of the respective components added were changed as shown in Table 2. Thereafter, a core was molded and a cylindrical body was subsequently molded with a PEEK resin in the same manner as in Example 1.

### (Example 22)

Pellets were obtained in the same manner as in Example 1, except that the inorganic filler was changed to anhydrous magnesium sulfate particles (particle size 20 µm) manufactured by Tomita Pharmaceutical Co., Ltd. and besides, silicone particles (trade name "KMP 590") manufactured by Shin-Etsu Chemical Co., Ltd. were added and that the proportions of the respective components added were changed as shown in Table 2. Thereafter, a core was molded and a cylindrical body was subsequently molded with a PEEK resin in the same manner as in Example 1.

### (Example 23)

Pellets were obtained in the same manner as in Example 1, except that the inorganic filler was changed to silicone particles (trade name "KMP 590") manufactured by Shin-Etsu Chemical Co., Ltd. and that the proportions of the respective components added were changed as shown in Table 2. Thereafter, pellets were obtained in the same manner as in Example 1. Thereafter, a core was molded and a cylindrical body made of stainless steel was subsequently molded in the same manner as in Example 1.

### (Example 24)

Pellets were obtained in the same manner as in Example 1, except that the inorganic filler was changed to silicone particles (trade name "X-52-854") manufactured by Shin-Etsu Chemical Co., Ltd. and that the proportions of the respective components added were changed as shown in Table 2. Thereafter, a core was molded and a cylindrical body made of stainless steel was subsequently molded in the same manner as in Example 1.

### (Example 25)

Pellets were obtained in the same manner as in Example 1, except that the inorganic filler was changed to silicone particles (trade name "KMP 590") manufactured by Shin-Etsu Chemical Co., Ltd. and that the proportions of the respective components added were changed as shown in Table 2. Thereafter, a core was molded and a cylindrical body made of stainless steel was subsequently molded in the same manner as in Example 1.

Note that in injection molding at the time when the core was molded, pellets slipped at the screw in the cylinder to make the injection molding unstable, but the core was able to be molded somehow.

### (Example 26)

Pellets were obtained in the same manner as in Example 1, except that the inorganic filler was changed to silicone particles (trade name "X-52-854") manufactured by Shin-Etsu Chemical Co., Ltd. and that the proportions of the respective components added were changed as shown in Table 2. Thereafter, a core was molded and a cylindrical body made of stainless steel was subsequently molded in the same manner as in Example 1.

Note that in injection molding at the time when the core was molded, pellets slipped at the screw in the cylinder to make the injection molding unstable, but the core was able to be molded.

### (Comparative Example 1)

Pellets were obtained in the same manner as in Example 1, except that the proportions of the respective components added were changed as shown in Table 2. Thereafter, a core was molded and a cylindrical body made of stainless steel was subsequently molded in the same manner as in Example 1.

Note that although pelletizing was able to be performed in Comparative Example 1, the strength of the pellets was low, and the shape of the pellets was not able to be retained stably for the reason that the pellets fractured easily by external force and for other reasons, so that a doubt about practicality arose.

### (Comparative Example 2)

Pellets were prepared in the same manner as in Example 1, except that the inorganic filler was changed to silica particles (trade name "SYLYSIA 358") manufactured by FUJI SILYSIA CHEMICAL LTD. and that the proportions of the respective components added were changed as shown in Table 2. However, the extent of instability in supplying the raw material into the extruder was large and the PVA-based resin slipped at the screw in the extruder when the pellets were prepared, making pelletizing by extrusion unable to perform stably, and therefore pellets for injection molding was not able to be prepared.

### (Comparative Example 3)

Pellets were obtained in the same manner as in Example 1, except that 10% by mass of diglycerin as a plasticizer for the polyvinyl alcohol was added and that the blending amounts of the respective components were changed as described in Table 2. Thereafter, a core was molded and a cylindrical body made of stainless steel was subsequently molded in the same manner as in Example 1.

### (Comparative Example 4)

Pellets were obtained in the same manner as in Example 1, except that the surfactant was not used and that the blending amounts of the respective components were changed as described in Table 2. Thereafter, a core was molded and a cylindrical body made of stainless steel was subsequently molded in the same manner as in Example 1.

Further, in the present comparative example, after the core was molded, a molded article (cylindrical body) made of a PEEK resin was also obtained using the core and using the PEEK resin as a molding material at a molding temperature of 250°C.

### (Comparative Example 5)

Attempts were made to obtain pellets in the same manner as in Example 1, except that the inorganic filler was changed to silicone particles (trade name "KMP 590") manufactured by Shin-Etsu Chemical Co., Ltd. and that the proportions of the respective components added were changed as shown in Table 2, but slips occurred in the extruder, and therefore extrusion was not able to be performed.

### (Comparative Example 6)

Attempts were made to obtain pellets in the same manner as in Example 1, except that the inorganic filler was changed to silicone particles (trade name "KX-62-854") manufactured by Shin-Etsu Chemical Co., Ltd. and that the proportions of the respective components added were changed as shown in Table 2, but slips occurred in the extruder, and therefore extrusion was not able to be performed.

### (Comparative Example 7)

Attempts were made to obtain pellets in the same manner as in Example 1, except that the inorganic filler was changed to commercially available calcium chloride particles (particle size 50 µm, solubility to water at 20°C 74.5 g) and besides, silicone particles (trade name "KMP 590") manufactured by Shin-Etsu Chemical Co., Ltd. were added and that the proportions of the respective components added were changed as shown in Table 2. However, fuming of water was intense to make the resin composition into a scorched state, and therefore the resin composition was not made into pellets satisfactorily.

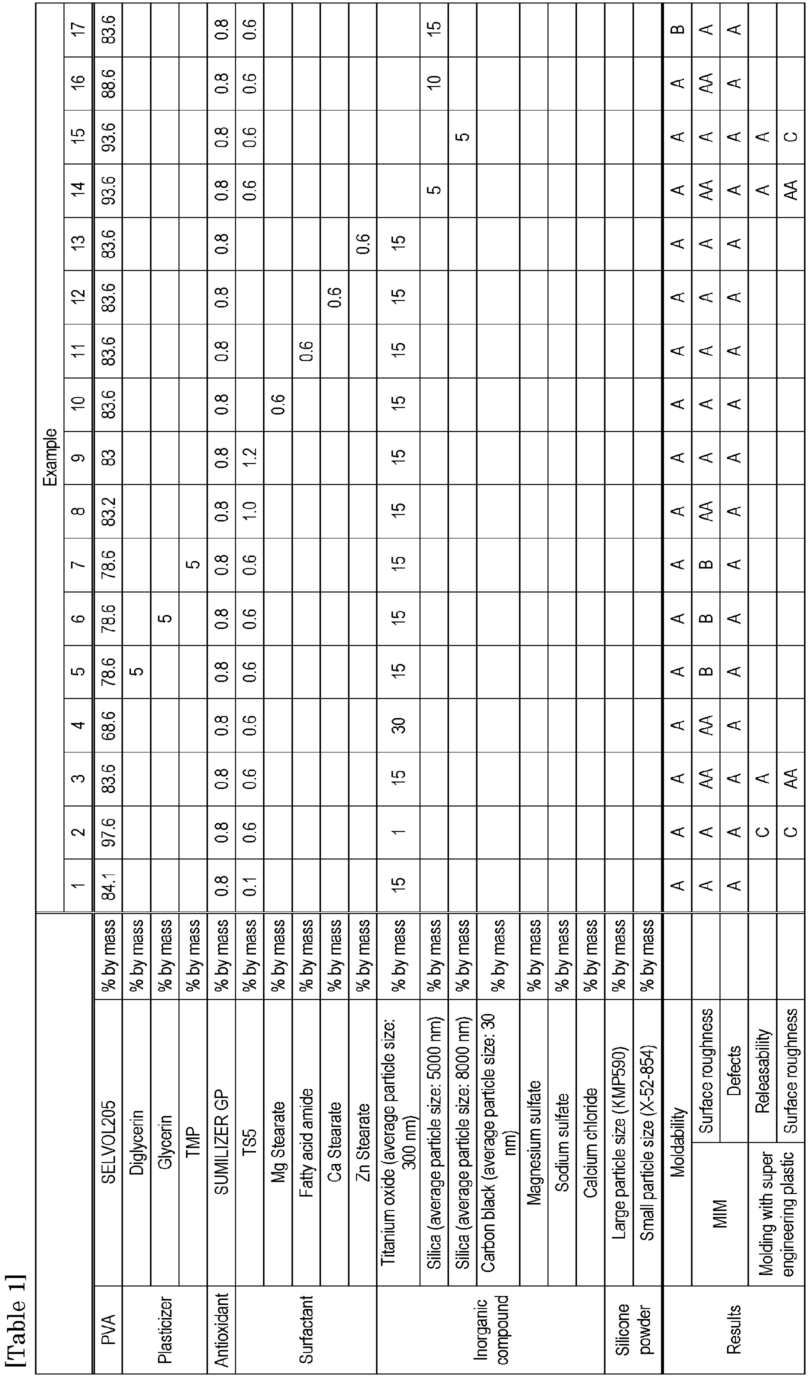

**[Table 2]**

| | | | | Example | | | | | | | | | Comparative Example | | | | | | |
|---|---|---|---|---|---|---|---|---|---|---|---|---|---|---|---|---|---|---|---|
| | | | | 18 | 19 | 20 | 21 | 22 | 23 | 24 | 25 | 26 | 1 | 2 | 3 | 4 | 5 | 6 | 7 |
| PVA | SELVOL205 | | % by mass | 83.6 | 68.6 | 88.2 | 88.2 | 78.1 | 98.1 | 98.1 | 97.8 | 97.8 | 63.6 | 92.7 | 73.6 | 84.2 | 97.7 | 97.7 | 87.7 |
| Plasticizer | Diglycerin | | % by mass | | | | | | | | | | | | 10 | | | | |
| | Glycerin | | % by mass | | | | | | | | | | | | | | | | |
| | TMP | | % by mass | | | | | | | | | | | | | | | | |
| Antioxidant | SUMILIZER GP | | % by mass | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 |
| Surfactant | TS5 | | % by mass | 0.6 | 0.6 | 1.0 | 1.0 | 1.0 | 1.0 | 1.0 | 1.0 | 1.0 | 0.6 | 1.5 | 0.6 | 0 | 1.0 | 1.0 | 1.0 |
| | Mg Stearate | | % by mass | | | | | | | | | | | | | | | | |
| | Fatty acid amide | | % by mass | | | | | | | | | | | | | | | | |
| | Ca Stearate | | % by mass | | | | | | | | | | | | | | | | |
| | Zn Stearate | | % by mass | | | | | | | | | | | | | | | | |
| Inorganic compound | Titanium oxide (average particle size: 300 nm) | | % by mass | | | | | | | | | | 35 | | 15 | 15 | | | |
| | Silica (average particle size: 5000 nm) | | % by mass | | | | | | | | | | | 5 | | | | | |
| | Silica (average particle size: 8000 nm) | | % by mass | | | | | | | | | | | | | | | | |
| | Carbon black (average particle size: 30 nm) | | % by mass | 15 | 30 | | | | | | | | | | | | | | |
| | Magnesium sulfate | | % by mass | | | 10 | | 20 | | | | | | | | | | | |
| | Sodium sulfate | | % by mass | | | | 10 | | | | | | | | | | | | |
| | Calcium chloride | | % by mass | | | | | | | | | | | | | | | | 10 |
| Silicone powder | Large particle size (KMP590) | | % by mass | | | | | 0.1 | 0.1 | | 0.4 | | | | | | 0.5 | | |
| | Small particle size (X-52-854) | | % by mass | | | | | | | 0.1 | | 0.4 | | | | | | 0.5 | 0.5 |
| Results | Moldability | | | A | A | A | A | A | A | A | B | B | C | C | A | A | C | C | C |
| | MIM | Surface roughness | | A | A | B | B | A | AA | AA | AA | AA | A | - | C | C | - | - | - |
| | | Defects | | B | B | A | A | A | A | A | A | A | A | - | A | B | - | - | - |
| | Molding with super engineering plastic | Releasability | | | | A | A | A | | | | | | | | C | | | |
| | | Surface roughness | | | | C | C | B | | | | | | | | AA | | | |

As is clear from Examples, the moldability in molding a core and formability in forming pellets are made favorable by molding the core using a resin composition containing a predetermined amount of a surfactant and a predetermined amount of at least any one of an inorganic filler and silicone particles, wherein the resin composition is free of a plasticizer or contains not more than a predetermined amount of a plasticizer. Further, in powdered metal injection molding (MIM), the inner surface smoothness of a molded article molded using the core is made favorable, and the occurrence of the defects to the molded article can be prevented.

In contrast, in Comparative Examples, when the content of any one of the surfactant, the plasticizer, and the inorganic filler or the silicone particles is out of the predetermined range, a trouble of lowered moldability in molding a core and formability in forming pellets or lowered surface smoothness of a molded article molded using the core occurred.

## Claims

1. A resin composition comprising: a polyvinyl alcohol-based resin; 0.1% by mass or more and 1.2% by mass or less of a surfactant; and at least any one of an inorganic filler and silicone particles, being free of a plasticizer or comprising 5.0% by mass or less of a plasticizer, and satisfying at least any one of the following requirements (1) and (2):
(1) a content of the inorganic filler is 1% by mass or more and 30% by mass or less;
(2) a content of the silicone particles is 0.01% by mass or more and 0.45% by mass or less.

2. The resin composition according to claim 1, comprising 1% by mass or more and 30% by mass or less of the inorganic filler.

3. The resin composition according to claim 1 or 2, comprising 0.01% by mass or more and 0.45% by mass or less of the silicone particles.

4. The resin composition according to any one of claims 1 to 3, wherein the inorganic filler has an average particle size of 30 nm or larger and 20 µm or smaller.

5. The resin composition according to any one of claims 1 to 4, wherein the inorganic filler is at least one selected from the group consisting of silica, titanium oxide, calcium carbonate, mica, talc, and carbon black.

6. The resin composition according to any one of claims 1 to 4, wherein the inorganic filler is a water-soluble inorganic filler having a solubility to water at 20°C of 10 g or more and 74 g or less.

7. The resin composition according to any one of claims 1 to 6, wherein the surfactant is at least one selected from the group consisting of glycerin fatty acid esters, fatty acid metal salts, and fatty acid amides.

8. The resin composition according any one of claims 1 to 7, wherein the plasticizer is at least one selected from the group consisting of ethylene glycol, glycerin, diglycerin, and trimethylolpropane.

9. The resin composition according to any one of claims 1 to 8, wherein the polyvinyl alcohol-based resin has a degree of polymerization of 900 or less.

10. The resin composition according to any one of claims 1 to 9, wherein a 4%-by-mass-concentration aqueous solution of the polyvinyl alcohol-based resin has a viscosity at 23°C of 100 mPa·s or lower.

11. The resin composition according to any one of claims 1 to 10, wherein the polyvinyl alcohol-based resin has a MFR at 210°C under a load of 2160 g of 1.0 g/10 min or more and 10 g/10 min or less.

12. The resin composition according to any one of claims 1 to 11, wherein the resin composition is for a core.

13. The resin composition according to claim 12, wherein a molding material for obtaining a molded article to be molded outside the core is either a sintering metal material or super engineering plastic.

14. The resin composition according to claim 13, wherein the molding material is the sintering metal material, and the polyvinyl alcohol-based resin has a degree of saponification of 72 mol% or more and 90 mol% or less.

15. A method for producing a molded article comprising:
a step of molding a core from the resin composition according to any one of claims 1 to 14;
a step of disposing the core in a mold;
a step of injecting a molding material into a cavity formed by the mold and the core to mold a molded article; and
a step of taking out the molded article from inside of the mold and removing the core after molding of the molded article.

16. The method for producing a molded article according to claim 15, wherein the molding material is either a sintering metal material or super engineering plastic.

17. The method for producing a molded article according to claim 15 or 16, wherein the molding material is the sintering metal material, and the molded article from which the core has been removed is further sintered to give a sintered molded article.
